# EUROPEAN PATENT APPLICATION

(11) **EP 4 498 571 A1**
(43) Date of publication of application: **29.01.2025**
(21) Application number: 24190554.6
(22) Date of filing: 24.07.2024
(51) Int. Cl.: H02K 1/02, H02K 1/24, H02K 1/26, H02K 1/276, H02K 3/487, H02K 15/02, H02K 15/03, B22F 10/00

(54) **LAMINATES FOR A ROTOR OF AN ELECTRIC MACHINE**

(30) Priority: 28.07.2023 US 202363516155 P; 04.08.2023 US 202363517718 P
(71) Applicant: General Electric Deutschland Holding GmbH, 60313 Frankfurt (DE); General Electric Company, Cincinnati, Ohio 45215-6301 (US)
(72) Inventor: OSAMA, Mohamed, 85748 Garching (DE); YI, Xuan, Niskayuna 12309 (US); YAGIELSKI, John Russell, Niskayuna 12309 (US); HUANG, Shenyan, Niskayuna 12309 (US)
(74) Representative: Openshaw & Co.

(57) **Abstract**

A rotor (106, 702) of an electric machine (100, 300), the rotor (106, 702) defining an axial direction and a radial direction, the rotor (106, 702) including: a plurality of laminates (260, 320, 400, 604) arranged along the axial direction, the plurality of laminates (260, 320, 400, 604) including a first laminate including: a body (402) formed of a first material, the first material being a ferromagnetic material; and a structural element formed integrally with the body (402) of a second material, the second material being a non-ferromagnetic material.

## Description

### PRIORITY INFORMATION

The present application claims priority to U.S. Provisional Patent Application Serial Number 63/516,155 filed July 28, 2023 and to U.S. Provisional Patent Application Serial Number 63/517,718 filed August 4, 2023, the disclosures of which are incorporated by reference herein.

### FIELD

This disclosure relates generally to laminates for a rotor of an electric machine and methods of manufacturing the same.

### BACKGROUND

The need for high power density and high efficiency electrical machines (i.e., electric motors and generators) has long been prevalent for a variety of applications, particularly for energy production applications. The current trend is to increase rotational speeds to increase the machine's power density, and hence reduce its mass and cost.

For instance, the power output of an electric machine may be increased by increasing the machine size, improving thermal management, increasing rotor speed, or by increasing the magnetic utilization. However, material selection and design criteria must be balanced between electromagnetic and mechanical performance.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a side cross-sectional view of a portion of an electric machine in accordance with an exemplary aspect of the present disclosure.
FIG. 2 is a perspective view of a bulk component in accordance with an exemplary aspect of the present disclosure.
FIG. 3 is a perspective view of the bulk component of FIG. 2 being sliced in accordance with an exemplary aspect of the present disclosure.
FIG. 4 is a perspective view of a soft magnetic thin film laminate sliced from the bulk component of FIG. 3 in accordance with an exemplary aspect of the present disclosure.
FIG. 5 is a perspective view of a plurality of thin film laminates as a portion of an electric machine in accordance with an exemplary aspect of the present disclosure.
FIG. 6 is a schematic view of a laminate in accordance with an exemplary embodiment of the present disclosure.
FIG. 7 is a schematic view of a laminate in accordance with another exemplary embodiment of the present disclosure.
FIG. 8 is a schematic view of a laminate in accordance with yet another exemplary embodiment of the present disclosure.
FIG. 9 is a schematic view of a laminate in accordance with still another exemplary embodiment of the present disclosure.
FIG. 10 is a schematic view of a laminate in accordance with yet another exemplary embodiment of the present disclosure.
FIG. 11 is a schematic view of a laminate in accordance with still another exemplary embodiment of the present disclosure.
FIG. 12 is a schematic view of a laminate in accordance with yet another exemplary embodiment of the present disclosure.
FIG. 13 is a schematic view of a laminate in accordance with still another exemplary embodiment of the present disclosure.
FIG. 14 is a schematic view of a laminate in accordance with yet another exemplary embodiment of the present disclosure.
FIG. 15 is a schematic view of a laminate in accordance with still another exemplary embodiment of the present disclosure.
FIG. 16 provides a flowchart diagram showing an exemplary method of manufacturing laminates in accordance with an exemplary aspect of the present disclosure.
FIG. 17 is a perspective view of a rotor of an electric machine, in accordance with one embodiment of the present specification.
FIG. 18A, FIG. 18B, and FIG. 18C are perspective views of rotors, in accordance with some embodiments of the present specification.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of' in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

As used herein, the terms "axial" and "axially" refer to directions and orientations that extend substantially parallel to a centerline of a component, such as of an electric machine. Moreover, the terms "radial" and "radially" refer to directions and orientations that extend substantially perpendicular to the centerline. In addition, as used herein, the terms "circumferential" and "circumferentially" refer to directions and orientations that extend arcuately about the centerline.

The term "electric machine" may generally refer to a machine having a stator and a rotor, the rotor rotatable relative to the stator. Additionally, the electric machine may be configured in any suitable manner for converting mechanical power, such as from a turbine machine like a gas turbine engine, to electrical power, or electrical power to mechanical power. For example, the electric machine may be configured as a synchronous reluctance electric machine; a permanent magnet electric machine, such as an internal permanent magnet electric machine, and/or as a spoke permanent magnet electric machine; or a closed rotor slot induction machine. In such a manner, the electric machine may be operable to generate or utilize alternating current (AC) electric power or direct current (DC) electric power. It will further be appreciated that the stator, the rotor, or both may generally include one or more of a plurality of coils or winding arranged in any suitable number of phases, one or more permanent magnets, one or more electromagnets, etc.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first", "second", and "third" may be used interchangeably to distinguish one component from another and are not intended to signify location or importance of the individual components.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As described herein, the presently disclosed subject matter can involve the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as laser powder bed fusion (LPBF) technology which is sometimes also referred to as direct metal laser melting (DMLM), a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Directed Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Binder Jet, and other additive manufacturing technologies that utilize an energy beam or other energy source to solidify an additive manufacturing material such as a powder material.

For example, in the DED process, the energy source may be used to create a molten pool on a substrate. Simultaneously, a powdered or wire form of the material to be deposited may be fed into the pool, where it melts and fuses with the substrate. The energy source and the material feed nozzle are moved relative to the substrate, typically along a pre-programmed path, to create the desired shape. An advantage of the DED process is an ability to create parts relatively quickly and the ability to use multiple materials in a single print.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 µm and 200 µm, although the thickness may be determined based on any number of parameters and may be any suitable size.

As used herein, the term "build plane" refers to a plane defined by a surface upon which an energy beam impinges to selectively irradiate and consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is generally related to laminates, such as for use in electric machines. In electric machine topologies, there can be a trade-off between electromagnetic and mechanical performance. For example, in interior permanent magnet (IPM) machines, the trade-off can manifest in the form of the sizing of bridges and center posts that hold the lamination together. Structurally, it is desirable to include larger bridges and center posts for mechanical integrity at high rotating speed. Electromagnetically, the bridges and center posts, however, can retain the magnetic flux in the rotor, which can lead to magnetic flux leakage. Reducing a size of the bridges and posts, however, may have a negative impact on the structural requirements to support the internal stress of operating at a desired speed and torque.

The magnetic utilization may additionally, or alternatively, be increased by using a low permeability material for the bridges and center posts. For instance, one approach can be to create a monolithic laminate having different magnetic states at desired locations, such as using a gas nitriding method and local heating method for local phase transformation and magnetic state change. However, this approach can have a specific alloy composition window and limitations on the magnetic and mechanical properties.

The disclosure herein provides for multi-material laminate for electric machines to address the above structural and electromagnetic issues, along with a new manufacturing approach to fabricate the multi-material laminates for electric machines.

In at least certain embodiments, the multi-material laminate may be formed as a bulk near-net-shape component having various or multiple materials with tailored magnetic and/or mechanical properties. Depending on the material composition, the component can be manufactured via a variety of investment casting techniques, additive manufacturing techniques, or a hybrid combination of investment casting and additive manufacturing techniques. The component can then be sliced into thin laminates, such as by electrochemical machining in a non-limiting example. The resulting laminates may inherently have the requisite geometry due to the near-net-shape original component, and can be subsequently assembled into at least a portion of the electric machine, e.g., the rotor.

For example, in certain exemplary aspects of the present disclosure, a rotor of an electric machine may be manufactured. The rotor may define an axial direction and a radial direction and may include a plurality of laminates arranged along the axial direction. The plurality of laminates may include including a first laminate having a body formed of a first material. The first material may be a ferromagnetic material. The first laminate may further include a structural element formed integrally with the body of a second material. The second material may be a non-ferromagnetic material. For example, the body may define a flux barrier region, and the structural element may be a bridge positioned at an end of the flux barrier region, or a post extending through an interior of the flux barrier region.

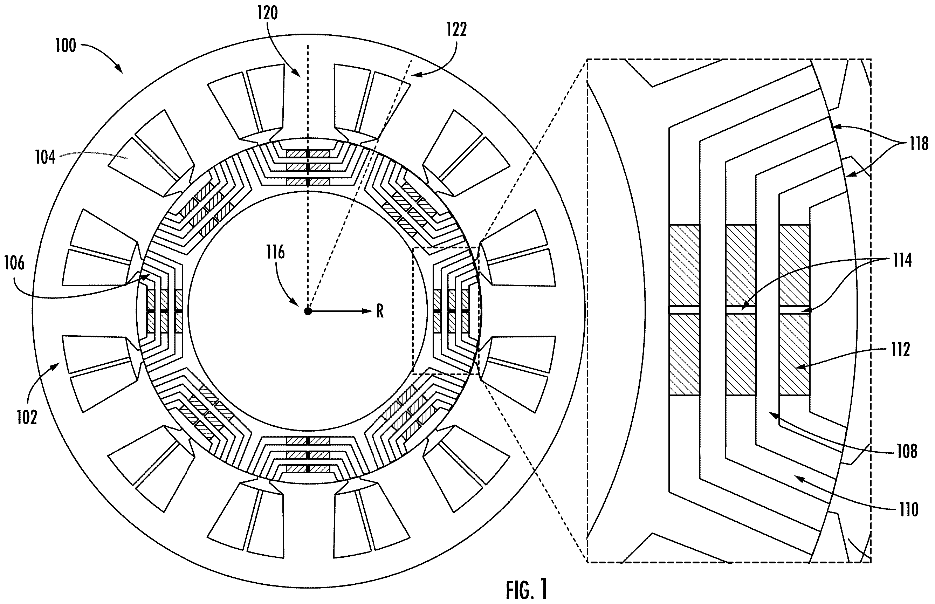

Referring now to the drawings, wherein identical numerals indicate the same elements throughout the figures, FIG. 1 illustrates one example of a portion of an electric machine 100. The electric machine 100 can be a synchronous reluctance or an interior permanent magnet machine. The electric machine 100 includes a stator 102 having distributed or concentrated conductive windings 104 through which electric current is conducted to cause the electric machine 100 to operate. The electric machine 100 also includes a rotor 106 formed from a laminated stack of conductive sheets, insulated from each other and clamped together. In some embodiments, the electric machine 100 can operate as a motor that operates to propel a vehicle. For example, the rotor 106 can be rotated by the electric current in the conductive windings 104 of the stator 102, which rotates a shaft joined to the rotor 106. This shaft can be coupled with turbine rotor blades, axles, wheels, or the like, to help propel a vehicle such as an airplane, land-based vehicle (e.g., automobile, rail vehicle, mining vehicle, etc.), or marine vessel.

The rotor 106 can be formed at least in part from a ferromagnetic material that allows magnetic flux to flow through the rotor 106. The rotor 106 can include one or more features that define flux carrier portions 108 of the rotor 106 and flux barriers 110 of the rotor 106. The flux barriers 110 can be gaps or removed portions in the rotor 106, such as air gaps in the rotor 106. Permanent magnets 112 can be placed inside these flux barriers 110, as in the embodiment depicted.

Alternatively, no permanent magnets 112 (not illustrated) may be positioned in the flux barriers 110 (in which case it would be a synchronous reluctance electric machine).

The flux carrier portions 108 represent segments of the rotor 106 that remain after the flux barriers 110 are cut from, removed, or otherwise formed in the rotor 106.

Neighboring flux carrier portions 108 may be connected by elongated posts 114 along the radial direction R (e.g., directions that radially extend from a center axis or axis of rotation 116 of the rotor 106). The ends of the flux carrier portions 108 may be connected by bridges 118 along a circumferential direction C (a direction that circumferentially surrounds the axis of rotation 116 of the rotor 106). As will be discussed in more detail below, the flux carrier portions 108, the bridges 118, or both may be formed of a different material than a body portion shown.

In operation, a varying electric current is conducted through the conductive windings 104 to cause the rotor 106 to rotate relative to the stator 102. This current creates magnetic flux in the rotor 106. The flux carrier portions 108 guide and carry magnetic flux in the rotor 106 while the flux barrier portions 110 block or impede flow of the magnetic flux in the rotor 106. These flux carrier portions 108 create a larger reluctance path in the rotor 106 along a first axis 120 (e.g., the quadrature or 'q' axis of the rotor 106) and a smaller reluctance path in the rotor 106 along a different, second axis 122 (e.g., the direct or 'd' axis of the rotor 106). The difference in reluctance along the first axis 120 and the second axis 122 leads to an overall reluctance torque. The difference in reluctance can be created by the shape and size of the flux carrier portions 108 and the flux barrier portions 110.

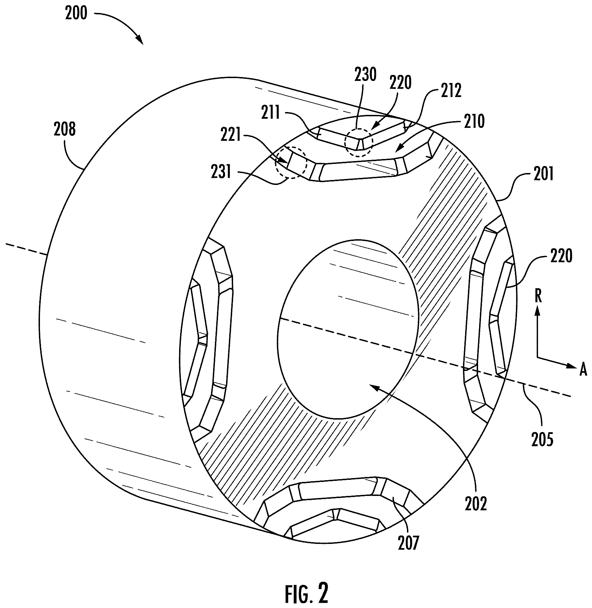

With reference to FIG. 2, a bulk component 200 is illustrated for utilization in manufacturing of thin laminates. The bulk component 200 can be a near-net-shape component. As used herein, near-net-shape refers to a component that is substantially the same shape as, such as having the same, or being within 5% of, dimensions in any given direction of the end use component to be utilized in an electric machine. By way of non-limiting example, as illustrated in FIG. 2, the bulk component 200 can be shaped as a rotor for the electric machine. That is, the bulk component 200 may comprise a toroidal body 201 surrounding a hollow core 202. The hollow core 202 can extend in an axial direction A, and the toroidal body 201 can extend away from the hollow core 202 in a radial direction R that is perpendicular to the axial direction A. In the illustrated example the toroidal body 201 is a square toroid though it need not be.

The bulk component 200 can further include a plurality of flux barrier gaps 210. The flux barrier gaps 210 can be distributed around a central axis 205 that extends in the axial direction A. Each of the flux barrier gaps 210 can extend through the bulk component 200 in the axial direction A form a first end 207 to a second end 208, opposite the first end. As illustrated in the rotor 106 presented in FIG. 1 and discussed above, the one or more of the flux barrier gaps 210 may be configured to eventually receive one or more permanent magnets (112 in FIG. 1).

The bulk component 200, including the flux barrier gaps 210, can be presented in a variety of different topologies. For instance, as illustrated in FIG. 2, four groups of flux barrier gaps 210 may be symmetrically distributed around the central axis 205 of the bulk component. Within one or more of these flux barrier gaps 210, two adjacent flux barrier gaps 210 may be disposed in a V-shaped orientation. That is, a first flux barrier gap 211 and a second flux barrier gap 212 may be slanted down and towards one another to form the V-shaped orientation.

The absence of material at the flux barrier gaps 210 may result in one or more high stress locations 230, 231 in the bulk component 200. For instance, where two adjacent flux barrier gaps 210 are arranged in a V-shaped orientation to define a post 220, the material of the bulk component 200 between the two flux barrier gaps 210 can define a first high stress location 230 due to the increased mechanical stress placed at the isolated material forming the center post 220. Similarly, a second high stress location 231 may exist directly adjacent the flux barrier gaps 210, such as at the bridges 221, or outer corners or edges, of the flux barrier gaps 210 furthest from the central axis 205. As disclosed herein, the material or materials of these high stress locations 230, 231 may be tailored to provide low permeability and low magnetic saturation, in addition to high mechanical strength.

In some embodiments, the bulk component 200 includes a plurality of different materials (e.g., different alloys) such that it is a multi-material bulk component. For instance, the bulk component 200 can include both a ferromagnetic material and a non-ferromagnetic material, as will be discussed in more detail below. The different materials may be utilized at different locations of the bulk component 200. For instance, the material having the higher tensile strength and low magnetic permeability may be used at one or more of the high stress locations 230, 231 of the bulk component 200 (e.g., at the center posts 220 or the bridges 221 that are between or adjacent the flux barrier gaps 210), while the majority or remainder of the bulk component 200 may include the ferromagnetic material.

The bulk component 200 can be produced using a variety of potential techniques. In some embodiments, the multi-material bulk component 200 may be formed using, e.g., additive manufacturing, investment casting, or a hybrid combination of additive manufacturing and investment casting. For instance, in some embodiments, a multi-material bulk component 200 may be produced via LPBF, DED, or binder jet additive manufacturing techniques.

In some embodiments, the bulk component 200 may be heat treated. For instance, the bulk component 200 may be heat treated at one or more temperatures prior to subsequent processing steps, such as heat treating the bulk component 200 prior to slicing it into a plurality of laminates. Heat treating the bulk component 200 can refine the mechanical or magnetic properties of the bulk component 200, such as by relieving residual stress in the bulk component 200 (e.g., from additive manufacturing), or otherwise altering the strength, hardness, or other mechanical or magnetic properties of the bulk component 200.

Notably, in some embodiments, the bulk component 200 may be produced into the near-net-shape of the ultimate component (e.g., a portion of an electrical machine) from casting, additive manufacturing, or other manufacturing techniques. However, in other embodiments, the bulk component 200 may be further machined into the near-net-shape of the desired component, such as when the original production of the bulk component is different than the final desired shape. Machining can include, for example, electrical discharge machining, mechanical grinding, or lathe machining.

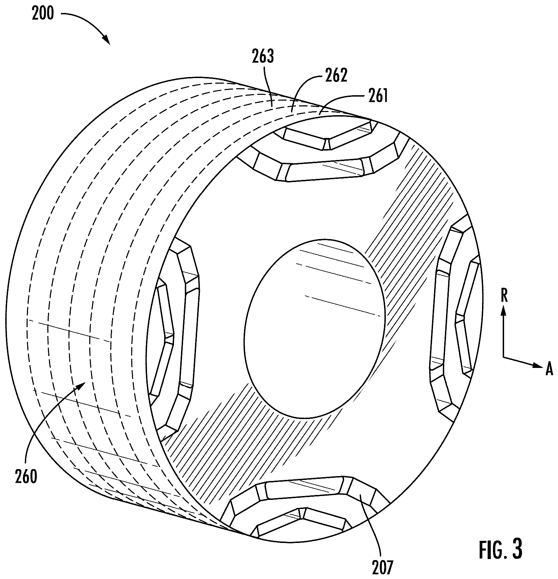

With reference to FIG. 3, the bulk component 200 of FIG. 2 is illustrated for slicing to produce a plurality of laminates 260. That is, after the bulk component 200 is produced, it can be sliced into a plurality of laminates 260. Due to the near-net-shape of the bulk component 200, the resulting laminates 260 may inherently have the requisite geometry for utilization in the electric machine.

As illustrated in FIG. 3, slicing of the bulk component 200 can occur along the radial direction R, perpendicular to the axial direction A. For instance, a first laminate 261 may be sliced from the first end 207 of the bulk component 200, followed by a second laminate 262, a third laminate 263, and so forth. As a result, the bulk component 200 can be readily sliced into the plurality of laminates 260 having tailored mechanical properties utilizing concerted material selection.

The thickness of the plurality of laminates 260 in the axial direction can be tailored as needed for eventual assembly of the portion of the electric machine. An appropriate laminate thickness may be determined by electric machine performance requirements and balanced by eddy current loss and stacking factor. For instance, the thickness for each of the laminates 260 may be less than or equal to 0.75 millimeters (mm), or less than or equal to 0.65 mm, or less than or equal to 0.5 mm. In some embodiments, the thickness for each of the laminates 260 may range from 0.1 mm to 0.75 mm, or range from 0.15 mm to 0.5 mm. In some embodiments, each of the plurality of laminates 260 may have the same thickness. However, in some embodiments, the thickness of the laminates 260 may vary from one to another, such that some of the laminates 260 may be thicker than others.

In some embodiments, the bulk component 200 may be sliced via electrochemical machining (ECM). Through ECM, a wire may be used to slice through the bulk component 200 at a plurality of locations to produce the plurality of laminates 260. Notably, due to the chemical nature of ECM, little or no heat input may occur during machining the laminates 260. As result of the lack of heat input during machining, the microstructure and material characteristics of the bulk component 200 can remain intact even when sliced into the plurality of laminates 260. Moreover, some bulk components may contain residual stress and be subject to warping upon the application of heat when slicing. However, through ECM, warping can be avoided due to the lack of any heat application when slicing.

In other exemplary embodiments, however, alternative cutting methods may be utilized, such as electrical discharge machining (EDM), which may or may not be combined with additional machining steps to reach the final products.

While FIG. 3 and the related description refers to slicing the bulk component 200 to produce the plurality of laminates 260, alternative or additional methods may also be utilized or avoided. For instance, in some embodiments, the one or more laminates may be produced from the bulk component free from rolling. As used herein, free from rolling refers to producing the component without the use of conventional rolling techniques such as hot rolling or cold rolling. For instance, by slicing the bulk component (e.g., a near-net-shape bulk component) via ECM, the resulting plurality of laminates may define the desired shape, which avoids the potential need for rolling techniques.

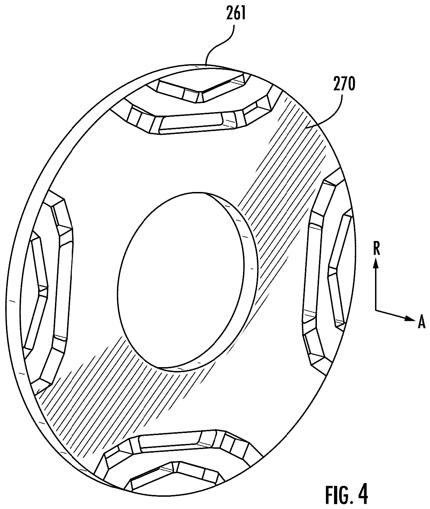

With reference now to FIG. 4, a first laminate 261 is illustrated as sliced from the bulk component 200 illustrated in FIGS. 2 and 3. As illustrated, the first laminate 261 can possess the desired topography after slicing without the need for additional processing steps thereby simplifying overall manufacturing.

In some embodiments, the first laminate 261 may be subjected to one or more treatment steps. For instance, depending on the materials, the surface 270 of the first laminate 261 may undergo treatment to provide protection, insulation, or other desired characteristics. In some embodiments, the surface 270 of the first laminate 261 may be coated in one or more locations with an electrically resistive coating. For instance, high silicon steels, such as Fe-6.5Si, may be coated with a C5 coating to provide an insulation layer. In some embodiments, the surface 270 of the first laminate 261 may be oxidized in one or more locations. Depending on the materials of the first laminate 261, the oxidization of the surface may naturally produce an electrically resistive layer and thus not require a supplemental insulating coating. For instance, surface oxidization of iron cobalt alloys can provide an electrically resistive layer without the need for a supplemental coating.

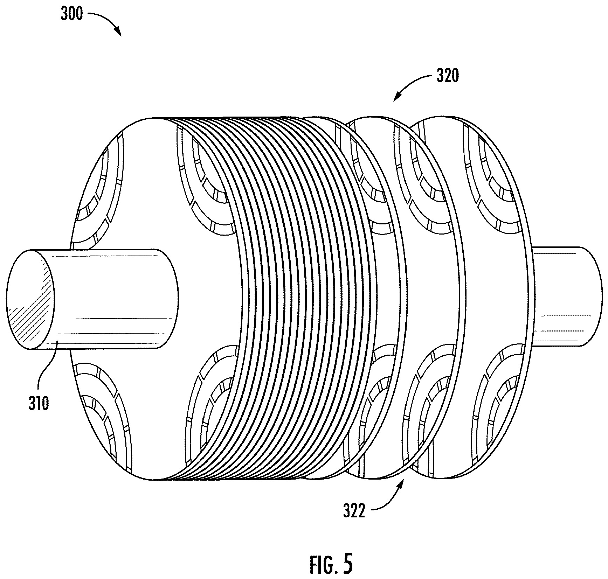

With reference to FIG. 5, a portion of an electric machine 300 is illustrated utilizing a plurality of laminates 320. The laminates 320 can be produced using the methods and processes disclosed herein and have a variety of potential topographies. Namely, after the plurality of laminates 320 are sliced from a bulk component, they can be assembled into a plurality of stacked layers for the electric machine 300. For instance, as illustrated in FIG. 5, the plurality of laminates 320 can be concentrically stacked onto a shaft 310. In some embodiments, each of the plurality of laminates 320 may be separated by a gap 322. The gaps 322 can be electrically insulative, such as by being filled with an insulative material to separate each of the plurality of laminates. In some embodiments, the plurality of laminates 320 can be stacked and bonded such as with chemical bonding via epoxy or other bonding materials.

While FIG. 5 illustrates the laminates 320 forming a rotor for an electric machine 300, the laminates 320 may alternatively form one or more other components of the electric machine 300. For instance, in some embodiments, the laminates 320 may be combined to form a stator (not illustrated) for the electric machine 300.

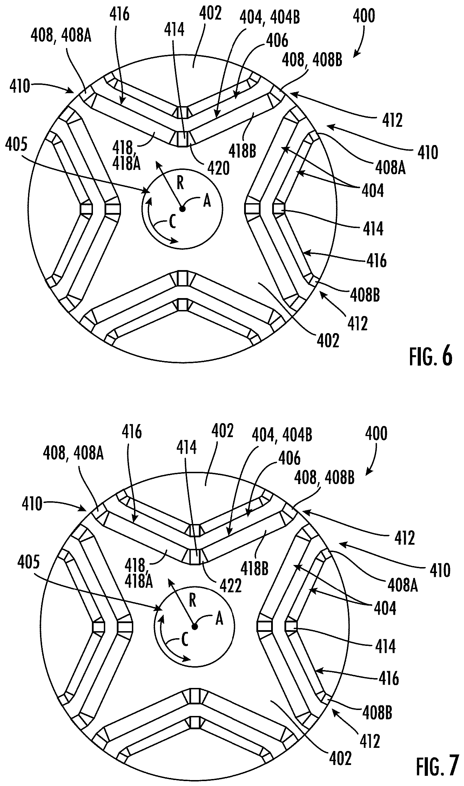

Referring now to FIG. 6, a laminate 400 in accordance with an exemplary embodiment of the present disclosure is provided. The laminate 400 of FIG. 6 may be a first laminate of a plurality of laminates forming a portion of an electric machine, such as forming a rotor of electric machine (see, e.g., FIGS. 1 through 5). In particular, and as will be appreciated from the discussion hereinbelow, for the embodiment of FIG. 6, the laminate 400 may be used to form a rotor of an interior permanent magnet electric machine.

The laminate 400 defines an axial direction A, a radial direction R, and a circumferential direction C, and generally includes a body 402 formed of a first material and a structural element formed integrally with the body 402 of a second material. As used herein, the term "formed integrally" when used to describe two materials refers to the two materials being formed together, i.e., not being formed separately and then assembled, such that the two materials are formed without seams or joints therebetween. Two or more materials being formed in accordance with one or more of the exemplary methods described herein falls within the scope of the term "formed integrally" for the purposes of this disclosure.

The first material is a ferromagnetic material. As used herein, the term "ferromagnetic" refers to a material that has the ability to become magnetized and be attracted to magnets, such as a material that has a relative magnetic permeability being greater than 1, and typically greater than or equal to 100 and less than or equal to 10000 before saturation. In such a manner, the first material may be iron, nickel, cobalt, and/or alloys thereof. For example, in certain exemplary embodiments, the first material may be an iron-cobalt alloy (FeCo). In such a manner, it will be appreciated that the first material may define a relatively high flux density, such a at least 2 Tesla (T), such as at least 2.25 T, such at up to 3.5 T.

The second material is a nonferromagnetic material. As used herein, the term "nonferromagnetic material" refers to a material that does not exhibit ferromagnetism, such as a material that, e.g., has a relative magnetic permeability of 1 or about 1 (e.g., less than 10), such as a material that has a high magnetic reluctance. The second material from which the structural element is formed may be selected to include mechanical properties more desirable than the first material to provide structural benefits for the laminate 400. For example, as will be appreciated, the first material may define a first yield strength and the second material may define a second yield strength. The second yield strength may be greater than the first yield strength to provide desired structural rigidity for the laminate 400.

As used herein, the terms "greater than" and "less than" when comparing two yield strengths refer to a comparison of the yield strengths of the two materials at a common temperature and under common environmental conditions (e.g., pressure). In certain exemplary embodiments, "greater" may refer to at least 10% greater and up to 1,000% greater, such as at least 20% greater and up to 200% greater (with the smaller value being in the denominator). Further, in certain exemplary embodiments, "less" may refer to at least 5% less and up to 90% greater, such as at least 10% greater and up to 75% greater (with the larger value being in the denominator).

For example, in one exemplary embodiment, the second yield strength may be greater than 100 kilopound per square inch (ksi), such as greater than 125 ksi, such as greater than 150 ksi, such as up to 600 ksi. For example, the second material may be a nickel chromium alloy, such as Inconel^{™} 718. The first material may be an iron-containing material, such as an iron-cobalt.

In particular, referring still to FIG. 6, it will be appreciated that the body 402 defines a flux barrier region 404, a flux carrier portion 406, and a hollow core 405. The structural element may be a bridge 408 positioned at a first end 410 of the flux barrier region 404, a bridge 408 positioned at a second end 412 of the flux barrier region 404, or a post 414 extending through an interior 416 of the flux barrier region 404. In particular, for the embodiment of FIG. 6, the structural element is a first structural element of a plurality of structural elements. Each of the plurality of structural elements is formed of the second material and formed integrally with the body 402 of the laminate 400.

More specifically, the plurality of structural elements includes a first bridge 408A positioned at the first end 410 of the flux barrier region 404, a second bridge 408B positioned at a second end 412 of the flux barrier region 404, and a post 414 extending through the interior 416 of the flux barrier region 404 between the first and end the second end 412.

More specifically, still, the flux barrier region 404 is a first flux barrier region 404A and the laminate 400 defines a plurality of flux barrier regions 404. Each flux barrier region 404 of the plurality of flux barrier regions 404 defined by the body 402 the laminate 400 includes a first bridge 408A and a second bridge 408B positioned at a first end 410 and a second end 412, respectively, as well as a post 414 positioned within an interior 416 of the respective flux barrier region 404.

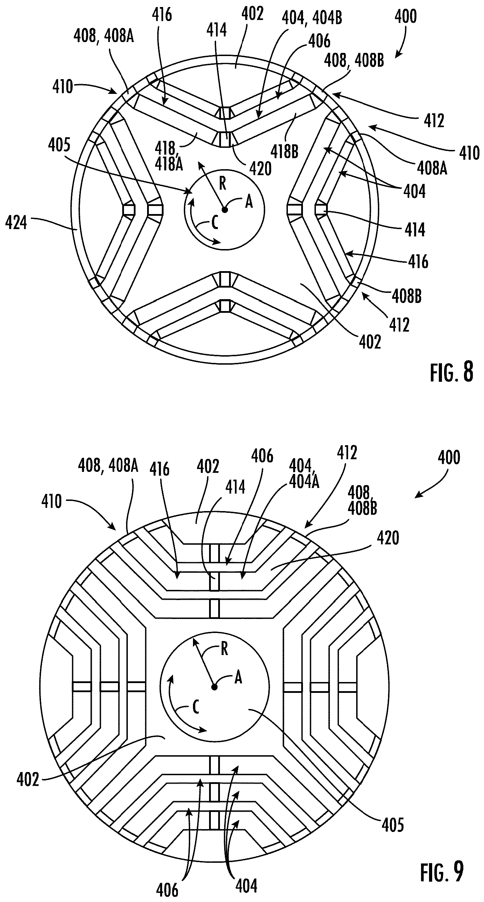

Notably, for the exemplary laminate 400 depicted, the flux barrier regions 404 define a V-shape, have two layers (i.e., there are two at each pole position between a central axis and outer periphery along the radial direction R), and are arranged in a four pole configuration (i.e., there are four magnetic poles along the circumferential direction C of the laminate 400). It will be appreciated, however, that in other exemplary embodiments, the flux barrier regions 404 defined by the body 402 of the laminate 400 may have other suitable shapes, may define any suitable number of layers (see, e.g., FIG. 9), and may be arranged in any other suitable pole configuration.

Referring still to the exemplary embodiment of FIG. 6, as noted above, the laminate 400 depicted may be utilized to form a portion of an interior permanent magnet electric machine. In particular, for the embodiment depicted, the rotor being formed of the depicted laminate 400 further includes a permanent magnet 418 extending through the flux barrier region 404 defined by the body 402 of the laminate 400. More specifically, still, for the embodiment depicted, the permanent magnet 418 is a first permanent magnet 418A and the rotor further includes a second permanent magnet 418B extending through the flux barrier region 404. One of the plurality of structural elements noted above configured as the post 414 extends through the interior 416 of the flux barrier region 404 at a location between the first permanent magnet 418A and the second permanent magnet 418B.

Further, for the embodiment of FIG. 6, the laminate 400 includes a flux barrier 420 positioned within the flux barrier region 404 in addition to the post 414 and the first permanent magnet 418A and second permanent magnet 418B. The flux barrier 420 may be a gas, such as air.

Referring now to FIG. 7, a laminate 400 in accordance with another exemplary embodiment of the present disclosure is provided. The exemplary laminate 400 of FIG. 7 may be configured in substantially the same manner as exemplary laminate 400 described above with reference FIG. 6. However, for the embodiment of FIG. 7, the laminate 400 further includes a structural filler 422 formed integrally with the body 402 and positioned within a flux barrier region 404 defined by the body 402. The structural filler 422 may be formed of, e.g., a nonferromagnetic material different than a second material forming one or more structural elements of the laminate 400. In particular, for the embodiment depicted, the laminate 400 includes a plurality of structural elements configured as a first bridge 408A located at a first end 410 of the flux barrier region 404, a second bridge 408B located at a second end 412 of the flux barrier region 404, and a post 414 extending through an interior 416 of the flux barrier region 404. The nonferromagnetic material of the structural filler 422 may define a yield strength less than a second yield strength of the second material. Additionally, in at least certain exemplary embodiments, the yield strength of the structural filler 422 may still be greater than the first yield strength of the first material.

Notably, for the embodiment of FIG. 7, in addition to being formed integrally with the body 402 of the laminate 400, the structural filler 422 is further formed integrally with one of the one or more structural elements.

Further, for the embodiment of FIG. 7, the structural filler 422 includes a plurality of portions, including a portion positioned between the post 414 and the first permanent magnet 418A, a portion positioned between the post 414 and the second permanent magnet 418B, a portion positioned between the first bridge 408A and the first permanent magnet 418A, and a portion positioned between the second bridge 408B and the second permanent magnet 418B.

Moreover, in the embodiment of FIG. 7, the flux barrier region 404 is a first flux barrier region 404A of a plurality of flux barrier regions 404. Each of the plurality of flux barrier regions 404 includes a structural filler 422 similar to the structural filler 422 described above with reference to the first flux barrier region 404A.

The inclusion of the structural filler 422 as described herein may further provide for a higher tip speed capacity of a resulting electric machine and power density limits for the resulting electric machine.

Referring now to FIG. 8, a laminate 400 in accordance with yet another exemplary embodiment of the present disclosure is provided. The exemplary laminate 400 of FIG. 8 may be configured in substantially the same manner as the exemplary laminate 400 described above with reference FIG. 6. However, for the embodiment of FIG. 8, the laminate 400 further includes an outer ring 424 formed of a third material and formed integrally with a body 402 of the laminate 400, with one or more structural elements of the laminate 400, or both. The third material is a ferromagnetic material different than a first material from which the body 402 is formed (the first material also being a ferromagnetic material). The third material defines a third yield strength that is greater than a first yield strength of the first material. For example, the third material may be an iron containing material, such as iron cobalt (in which case the first material may be a silicon iron composite, such as Fe-6.5Si). In such a manner, the outer ring 424 may provide a desired mechanical strength for the laminate 400. Additionally, such may allow for the first material forming the body 402 of the laminate 400 to be, e.g., a more economical material. For example, in certain exemplary embodiments, the third material may be an iron cobalt alloy and the first material may be a relatively high silicon content steel, such as Fe-6.5Si, to allow for high rotor efficiency in a more economical manner.

Referring now to FIG. 9, laminate 400 in accordance with yet another exemplary embodiment of the present disclosure is provided. The exemplary laminate 400 of FIG. 9 may be configured in substantially the same manner as the exemplary laminate 400 described above with reference to FIG. 6. However, for the embodiment of FIG. 9, the laminate 400 may be utilized to form a rotor of a synchronous reluctance electric machine. Accordingly, for the embodiment depicted, a body 402 of the laminate 400 defines a plurality of flux barrier regions 404, without permanent magnets (see permanent magnets 418 of FIGS. 6 through 8) positioned therein.

Further, it will be appreciated that for the embodiment depicted, the flux barrier regions 404 defined by the body 402 of the laminate 400 are arranged in a unique manner relative to the exemplary laminate 400 of, e.g., FIG. 6. In particular, for the embodiment of FIG. 9, each flux barrier region 404 of the plurality of flux barrier regions 404 defines a U-shape, and the flux barrier regions 404 are arranged in a three layer configuration at each of the four poles.

As with the embodiment of FIG. 6, the body 402 is formed of a first material, and the laminate 400 includes a structural element formed integrally with the body 402 of a second material. In particular, the structural element is one of a plurality of structural elements, the plurality of structural elements including first and second bridges 408A, 408B arranged at respective first and second ends 410, 412 of the plurality of flux barrier regions 404 and posts 414, each post 414 extending through an interior 416 of a respective flux barrier region 404.

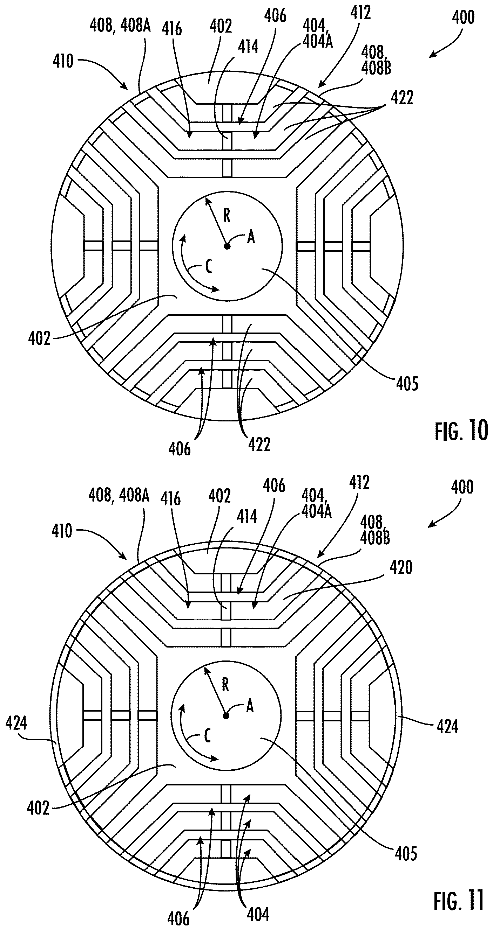

Referring now to FIGS. 10 and 11, additional exemplary laminates 400 of the present disclosure are depicted. The exemplary laminates 400 of FIGS. 10 and 11 are configured in a similar manner as exemplary laminate 400 of FIG. 9. However, for the embodiment of FIG. 10, the exemplary laminate 400 further includes a structural filler 422 formed integrally with a body 402 and positioned within a flux barrier region 404 defined by the body 402 (similar to, e.g., the embodiment of FIG. 7). More specifically, for the embodiment of FIG. 10 each of the plurality of flux barrier regions 404 includes structural filler 422 positioned substantially completely therein and formed integrally with the body 402. In particular, for the embodiment of FIG. 10, the structural filler 422 of each of the plurality of flux barrier regions 404 extends continuously from a post 414 to the first bridge 408A located at the first end 410 of the respective flux barrier region 404 and from the post 414 to the second bridge 408B located at the second end 412 of the respective flux barrier region 404.

It will be appreciated that in an alternative embodiment, the laminate 400 may not include a post 414 within one or more of the plurality of flux barrier regions 404, and the structural filler 422 may optionally extend continuously from a first bridge 408A through the respective flux barrier region 404 to a second bridge 408B. Additionally, or alternatively, the laminate 400 may not include the bridges 408 and the structural filler 422 may extend continuously from a first end 410 through the respective flux barrier region 404 to a second end 412 (optionally with a post 414).

Further, for the embodiment of FIG. 11, the exemplary laminate 400 further includes an outer ring 424 formed of a third material, the third material being a ferromagnetic material different than the first material, and having a higher yield strength than a first yield strength of the first material. As with the embodiment of, e.g., FIG. 8, described above, the exemplary outer ring 424 extends substantially continuously along a perimeter of the laminate 400 (i.e., continuously, optionally with the exception of one or more bridges 408).

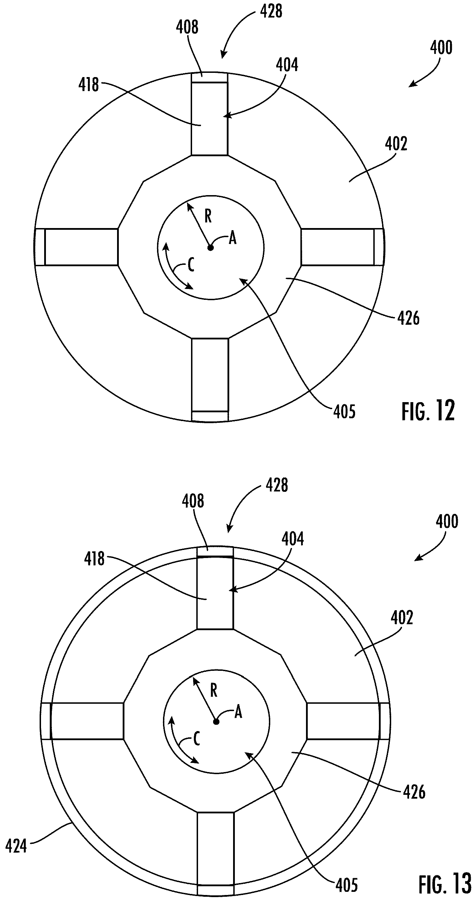

Referring now to FIG. 12, a laminate 400 in accordance with yet another exemplary embodiment of the present disclosure is provided. The exemplary laminate 400 of FIG. 12 may be configured in substantially the same manner as the exemplary laminate 400 described above with reference to FIG. 6. However, for the embodiment of FIG. 12, the laminate 400 may be utilized to form a rotor of a spoke permanent magnet electric machine. According to the embodiment depicted, a body 402 of the laminate 400 defines a plurality of flux barrier regions 404 extending along a radial direction R, each with a permanent magnet 418 positioned therein.

As with the embodiment of FIG. 6, the body 402 of the exemplary laminate 400 of FIG. 12 is formed of a first material, and the laminate 400 further includes a structural element formed integrally with the body 402 of a second material. The first material is a ferromagnetic material and the second material is a nonferromagnetic material having a higher yield strength than a first yield strength of the first material.

In particular, for the embodiment depicted, the structural element is a hub 426 of the laminate 400, with each flux barrier region 404 extending outwardly from the hub 426 along the radial direction R.

In addition, the laminate 400 depicted in FIG. 12 includes a plurality of additional structural elements configured as bridges 408, with each bridge 408 positioned at an outer end 428 of the respective flux barrier region 404 along the radial direction R.

Referring now to FIG. 13, a laminate 400 in accordance with yet another exemplary embodiment of the present disclosure is provided. The exemplary laminate 400 of FIG. 13 may be configured in substantially the same manner as exemplary laminate 400 of FIG. 12, however, for the embodiment of FIG. 13, the laminate 400 further includes an outer ring 424 formed of a third material. The outer ring 424 is formed integrally with a body 402 of the laminate 400, and the third material is a ferromagnetic material having a higher yield strength than a first yield strength of the first material.

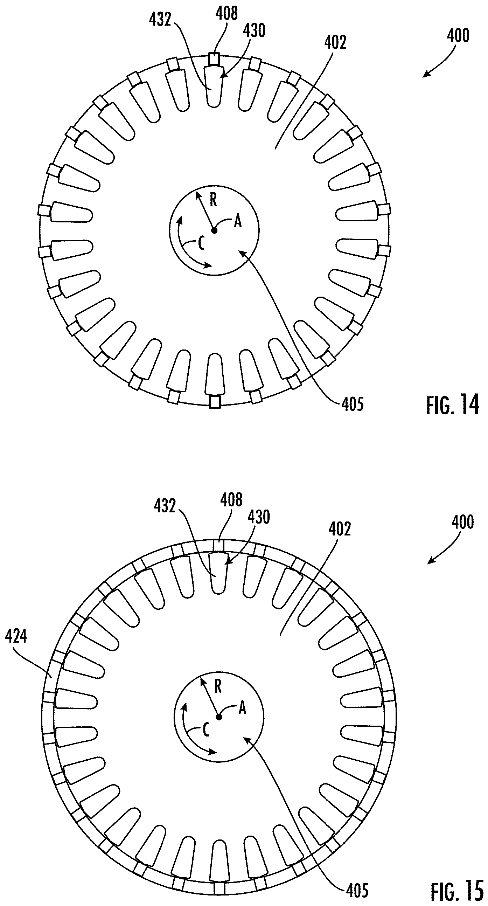

Referring now to FIG. 14, a laminate 400 in accordance with still another exemplary embodiment of the present disclosure is provided. The exemplary laminate 400 of FIG. 14 may be configured in a similar manner as the exemplary laminate 400 described above with reference to FIG. 6. However, for the embodiment of FIG. 14, the laminate 400 may be utilized to form a rotor of a closed rotor slot induction electric machine. In such a manner, the exemplary laminate 400 includes a body 402 defining a rotor slot 430, and more specifically defining a plurality of rotor slots 430 arranged along a circumference of the body 402. The body 402 is formed of a first material, the first material being a ferromagnetic material.

In addition, the laminate 400 includes a structural element formed integrally with the body 402. The structural element is formed of a second material, the second material being a nonferromagnetic material having a yield strength greater than a first yield strength of the first material. In the embodiment depicted, the structural element is configured as a bridge 408 extending across an opening of a respective rotor slot 430 of the plurality of rotor slots 430 at an outer end of the respective rotor slot 430 along the radial direction R. More specifically, the laminate 400 includes a plurality of structural elements configured as bridges 408, each extending across a respective opening of the respective rotor slot 430 of the plurality of rotor slots 430.

The laminate 400 further includes a plurality of rotor bars 432, each rotor bar 432 positioned in a respective rotor slot 430 of the plurality of rotor slots 430. The rotor bars 432 may be formed of a material different than the first material and different than the second material, such as, copper, aluminum, a copper alloy, an aluminum alloy, etc.

Referring now to FIG. 15, a laminate 400 in accordance with yet another exemplary embodiment of the present disclosure is provided. The exemplary laminate 400 of FIG. 15 may be configured in substantially the same manner as the exemplary laminate 400 described above the reference to FIG. 14. However, for the embodiment of FIG. 15, the laminate 400 further includes an outer ring 424 formed of a third material (different than the first material) and extending substantially continuously (i.e., continuously, optionally with the exception of one or more bridges 408) along a circumference/ perimeter of the laminate 400. The third material is a ferromagnetic material that defines a yield strength greater than a first yield strength of the first material.

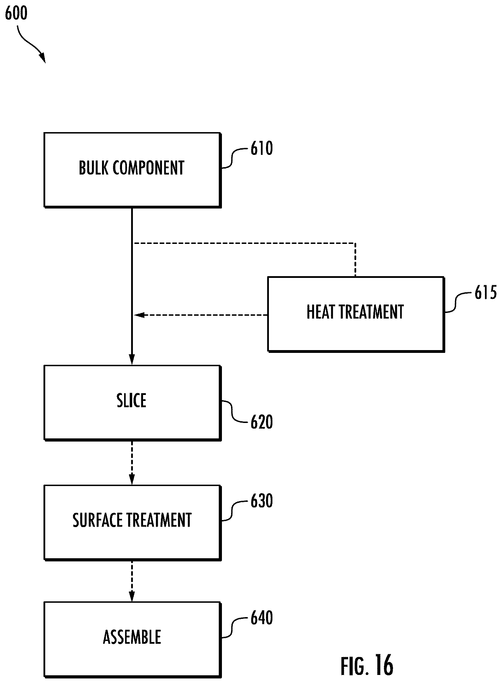

Referring now to FIG. 16, a method 600 is presented for manufacturing laminates, such as those discussed herein and illustrated in FIGS. 3-15. The method 600 starts with producing a bulk component in step 610. As discussed herein, the bulk component can include a ferromagnetic material (e.g., a portion which will subsequently form a body of a laminate) and a non-ferromagnetic material (e.g., a portion which will subsequent the form a structural element of the laminate) such as through a multi-material bulk component. The bulk component can further include, for instance, a near-net-shape rotor or stator for an electric machine.

Forming the bulk component in step 610 can include manufacturing the bulk component through various manufacturing methods. For instance, forming the bulk toroidal component can include additively manufacturing the bulk component, such as through LPBF, DED, or via binder jet printing. In even some embodiments, a portion of the bulk component may be produced by investment casting in one material, while the remaining portion of the bulk component may be built by additive manufacturing in another material. For example, forming the component in step 610 may include forming a first portion of a first material and forming a second portion of a second material onto and integrally with the first portion.

Alternatively, forming the bulk component in step 610 may simply include providing a previously manufactured bulk component for subsequent manufacturing steps within method 600.

Optionally, method 600 may further include heat treating the bulk component in step 615. Heat treating in step 615 may include subjecting the bulk component to one or more elevated temperatures prior to subsequent processing steps to refine the mechanical or magnetic properties of the bulk component. For instance, heat treating in step 615 may be used to relieve residual stress in the bulk component (e.g., from additive manufacturing in step 610), or otherwise altering the strength, hardness, or other mechanical or magnetic properties of the bulk component.

With continued reference to FIG. 16, the method 600 further includes slicing the bulk component in step 620. The bulk component can be sliced a plurality of times in a radial direction (perpendicular to an axial direction) to produce a plurality of laminates. In some embodiments, the bulk component can be sliced via electrochemical machining. In some embodiments, the bulk component can be sliced via electrical discharge machining. The resulting plurality of soft magnetic thin film laminates may then be used for electrical machines, such as in a turbomachine like a gas turbine engine.

Optionally, method 600 may further comprise surface treating the plurality of laminates in step 630. Surface treating may include, for example, heat treating, shaping, machining, or other surface treatments or combinations thereof. For instance, in some embodiments, the plurality of laminates may be at least partially coated in step 630 with an electrically resistant coating.

Method 600 may further comprise assembling the laminates in step 640 to form at least a portion of the electric machine. For instance, the plurality of soft magnetic thin film laminates can be assembled into a plurality of stacked layers, such as being concentrically stacked onto a shaft along the axial direction. In some embodiments, each of the plurality of laminates may be separated by a gap. The gaps can be electrically insulative, such as by being filled with an insulative material to separate each of the plurality of laminates. In some embodiments, the plurality of laminates can be stacked and bonded such as chemical bonding via epoxy or other bonding materials. The stacked soft magnetic thin film laminates can be utilized to form one or more different components of the electric machine, such as the rotor or the stator.

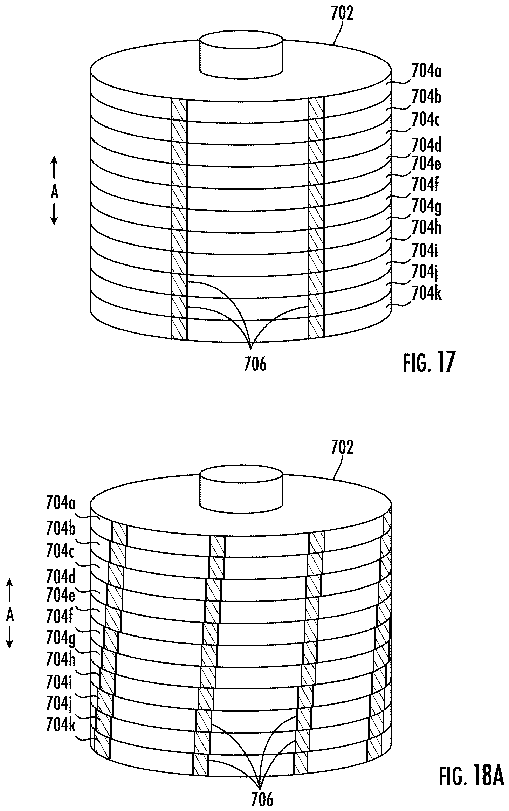

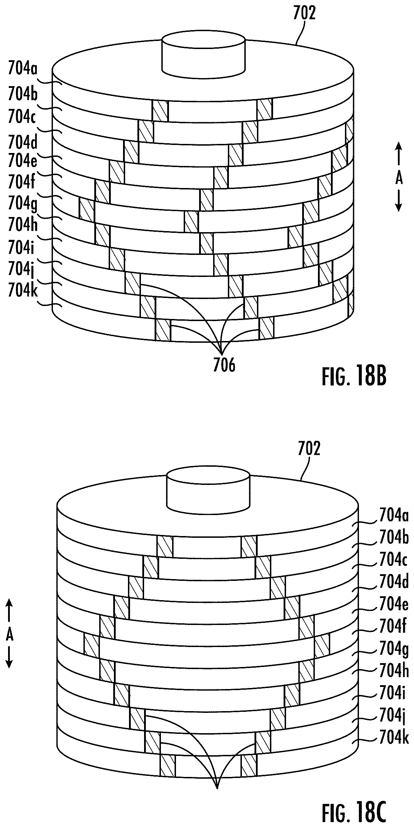

Referring now to FIG. 17, a perspective view is provided of a rotor 702, in accordance with one embodiment of the present disclosure. As previously noted, the rotor 702 of the electric machine may include two or more rotor laminates. The rotor 702 of FIG. 17, represents one such embodiment of the rotor 106. As depicted in FIG. 17, the rotor 702 is shown to include eleven rotor laminates 704a through 704k. The rotor laminates 704a through 704k are stacked an axial direction A of the electric machine in a non-skewed configuration as shown in FIG. 17. For example, the rotor laminates 704a through 704k may be stacked in the axial direction A such that a non-ferromagnetic portion, and more specifically a non-ferromagnetic bridge 706, of all the rotor laminates 704a through 704k are aligned with each other. However, in certain embodiments, the rotor laminates 704a through 704k may be stacked along the axial direction A in a skewed configuration as shown in FIGS. 18A-18C, in accordance with one embodiment of the present disclosure. For example, as depicted, a rotor configuration of FIG. 18A, each rotor laminate is displaced by a fixed angle from an adjacent rotor laminate in a single direction (e.g., in a clockwise direction). In certain embodiments, the rotor laminates may also be displaced by an irregular angle from adjacent rotor laminates. In another example configuration of FIG. 18B, the rotor laminates are shown as skewed in a symmetrical fashion with respect to the middle rotor laminate 704F. In general, the rotor configurations of FIGS. 18A and 18B depict a stepped skewing of the rotor laminates 704a through 704k . A rotor configuration of FIG. 18C depicts a sinusoidal skewing of the rotor laminates 704a through 704k. It will be appreciated that other types of skewing arrangements that are different than those depicted in FIGS. 18A-18C may also be employed without limiting the scope of the present specification.

The inventors of the present disclosure found that by including the rotor having the laminates of the multiple materials as described herein resulted in a reduction in a flux leakage within the rotor, allowing for an increase in torque, but also an increase in a cogging torque or torque ripple. While a non-skewed configuration is certainly useful, inclusion of a skewed configuration as in FGIS. 18A through 18C may reduce a torque ripple. Notably, the skewing may result in a net force along the axial direction (see FIG. 18A). Accordingly, by having a non-linear, or mirrored skewing as in FIGS. 18B and 18C, the resulting axial forces may cancel one another.

Further aspects are provided by the subject matter of the following clauses:

A rotor of an electric machine, the rotor defining an axial direction and a radial direction, the rotor comprising: a plurality of laminates arranged along the axial direction, the plurality of laminates including a first laminate comprising: a body formed of a first material, the first material being a ferromagnetic material; and a structural element formed integrally with the body of a second material, the second material being a non-ferromagnetic material.

The rotor of one or more of the preceding clauses, wherein the body defines a flux barrier region, and wherein the structural element is a bridge positioned at an end of the flux barrier region.

The rotor of one or more of the preceding clauses, wherein the body defines a flux barrier region, and wherein the structural element is a bridge positioned at an end of the flux barrier region or a post extending through an interior of the flux barrier region, and wherein the rotor further comprises: a permanent magnet extending through the flux barrier region.

The rotor of one or more of the preceding clauses, wherein the permanent magnet is a first permanent magnet, wherein the rotor further comprises: a second permanent magnet extending through the flux barrier region, wherein the structural element is the post extending through the interior of the flux barrier region between the first and second permanent magnets.

The rotor of one or more of the preceding clauses, wherein the body defines a flux barrier region, and wherein the structural element is a first structural element, wherein the rotor further comprises: a second structural element formed integrally with the body of the second material, the first structural element being a first bridge positioned at a first end of the flux barrier region, and the second structural element being a second bridge positioned at a second end of the flux barrier region.

The rotor of one or more of the preceding clauses, wherein the structural element is a hub of the first laminate.

The rotor of one or more of the preceding clauses, wherein the first material defines a first yield strength, wherein the second material defines a second yield strength, and wherein the second yield strength is greater than the first yield strength.

The rotor of one or more of the preceding clauses, wherein the first laminate further comprises: an outer ring formed of a third material, wherein the third material is a ferromagnetic material different than first material.

The rotor of one or more of the preceding clauses, wherein the first material defines a first yield strength, wherein the third material defines a third yield strength, and wherein the third yield strength is greater than the first yield strength.

The rotor of one or more of the preceding clauses, wherein the body defines a flux barrier region, and wherein the first laminate further comprises a structural filler formed integrally with the body and positioned in the flux barrier region, wherein the structural filler is formed of a non-ferromagnetic material different than the second material.

The rotor of one or more of the preceding clauses, wherein the non-ferromagnetic material of the structural filler defines a yield strength less than a second yield strength of the second material.

The rotor of one or more of the preceding clauses, wherein the electric machine is a synchronous reluctance electric machine.

The rotor of one or more of the preceding clauses, wherein the electric machine is an interior permanent magnet electric machine.

The rotor of one or more of the preceding clauses, wherein the structural element is a hub.

The rotor of one or more of the preceding clauses, wherein the electric machine is a spoke permanent magnet electric machine.

The rotor of one or more of the preceding clauses, wherein the electric machine is a closed rotor slot induction electric machine.

A method of manufacturing a rotor of an electric machine, the rotor defining an axial direction, the method comprising: forming bulk component, wherein forming the bulk component comprises forming a first section of a first material and forming a second section integrally with the first section of a second material, wherein the first material is a ferromagnetic material and the second material is a non-ferromagnetic material; and slicing the bulk component in a direction perpendicular to the axial direction to produce a plurality of laminates.

The method of one or more of the preceding clauses, wherein the slicing is via electrochemical machining.

The method of one or more of the preceding clauses, wherein each of the plurality of laminates has a thickness in the axial direction of less than or equal to 0.5 mm.

The method of one or more of the preceding clauses, wherein forming the bulk component comprises forming a near-net-shape bulk component comprising the first portion having a toroidal body surrounding a hollow core that extends in the axial direction and defines a flux barrier portion and the second portion positioned at an end of the flux barrier portion or within the flux barrier portion.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A rotor (106, 702) of an electric machine (100, 300), the rotor (106, 702) defining an axial direction and a radial direction, the rotor (106, 702) comprising:
a plurality of laminates (260, 320, 400, 604) arranged along the axial direction, the plurality of laminates (260, 320, 400, 604) including a first laminate comprising:
a body (402) formed of a first material, the first material being a ferromagnetic material; and
a structural element formed integrally with the body (402) of a second material, the second material being a non-ferromagnetic material.

2. The rotor (106, 702) of claim 1, wherein the body (402) defines a flux barrier region (404), and wherein the structural element is a bridge (408) positioned at an end of the flux barrier region (404).

3. The rotor (106, 702) of claim 1, wherein the body (402) defines a flux barrier region (404), and wherein the structural element is a bridge (408) positioned at an end of the flux barrier region (404) or a post (220, 414) extending through an interior (416) of the flux barrier region (404), and wherein the rotor (106, 702) further comprises:
a permanent magnet (418) extending through the flux barrier region (404).

4. The rotor (106, 702) of claim 3, wherein the permanent magnet (418) is a first permanent magnet (418A), wherein the rotor (106, 702) further comprises:
a second permanent magnet (418B) extending through the flux barrier region (404), wherein the structural element is the post (220, 414) extending through the interior (416) of the flux barrier region (404) between the first and second permanent magnets (418A, 418B).

5. The rotor (106, 702) of claim 1, wherein the body (402) defines a flux barrier region (404), and wherein the structural element is a first structural element, wherein the rotor (106, 702) further comprises:
a second structural element formed integrally with the body (402) of the second material, the first structural element being a first bridge (408A) positioned at a first end (207, 410) of the flux barrier region (404), and the second structural element being a second bridge (408B) positioned at a second end (208, 412) of the flux barrier region (404).

6. The rotor (106, 702) of any preceding claim, wherein the structural element is a hub (426) of the first laminate.

7. The rotor (106, 702) of any preceding claim, wherein the first material defines a first yield strength, wherein the second material defines a second yield strength, and wherein the second yield strength is greater than the first yield strength.

8. The rotor (106, 702) of any preceding claim, wherein the first laminate further comprises:
an outer ring (424) formed of a third material, wherein the third material is a ferromagnetic material different than first material.

9. The rotor (106, 702) of claim 8, wherein the first material defines a first yield strength, wherein the third material defines a third yield strength, and wherein the third yield strength is greater than the first yield strength.

10. The rotor (106, 702) of any preceding claim, wherein the body (402) defines a flux barrier region (404), and wherein the first laminate further comprises a structural filler (422) formed integrally with the body (402) and positioned in the flux barrier region (404), wherein the structural filler (422) is formed of a non-ferromagnetic material different than the second material.

11. The rotor (106, 702) of claim 10, wherein the non-ferromagnetic material of the structural filler (422) defines a yield strength less than a second yield strength of the second material.

12. The rotor (106, 702) of any preceding claim, wherein the electric machine (100, 300) is a synchronous reluctance electric machine.

13. The rotor (106, 702) of any of claims 1-11, wherein the electric machine (100, 300) is an interior permanent magnet electric machine.

14. The rotor (106, 702) of any preceding claim, wherein the structural element is a hub (426).

15. A method (600) of manufacturing a rotor (106, 702) of an electric machine (100, 300), the rotor (106, 702) defining an axial direction, the method (600) comprising:
forming bulk component (200), wherein forming the bulk component (200) comprises forming a first section of a first material and forming a second section integrally with the first section of a second material, wherein the first material is a ferromagnetic material and the second material is a non-ferromagnetic material; and
slicing the bulk component (200) in a direction perpendicular to the axial direction to produce a plurality of laminates (260, 320, 400, 604).
